Europäisches Patentamt

European Patent Office

Office européen des brevets

(11) Veröffentlichungsnummer: **0 079 462**
**B1**

# EUROPÄISCHE PATENTSCHRIFT

(45) Veröffentlichungstag der Patentschrift:
08.01.86

(51) Int. Cl.⁴: **H 02 J 9/06**

(21) Anmeldenummer: **82109417.4**

(22) Anmeldetag: **12.10.82**

(54) Leuchtstofflampen-Sicherheitsleuchte.

(30) Priorität: **16.10.81 DE 3141139**

(43) Veröffentlichungstag der Anmeldung:
**25.05.83 Patentblatt 83/21**

(45) Bekanntmachung des Hinweises auf die Patenterteilung:
**08.01.86 Patentblatt 86/2**

(84) Benannte Vertragsstaaten:
**AT BE CH FR GB IT LI NL SE**

(56) Entgegenhaltungen:
**FR - E - 86 092**
**US - A - 3 801 794**
**US - A - 3 869 639**

(73) Patentinhaber: **CEAG Licht- und Stromversorgungstechnik GmbH, Juchostrasse 40, D-4600 Dortmund 1 (DE)**

(72) Erfinder: **Scharfenberg, Manfred, Hollohweg 81, D-4750 Unna-Afferde (DE)**

(74) Vertreter: **Kempe, Wolfgang, Dr. et al, c/o Brown, Boveri & Cie AG Postfach 351, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Leuchtstofflampen-Sicherheitsleuchte gemäss dem Oberbegriff des Patentanspruchs 1.

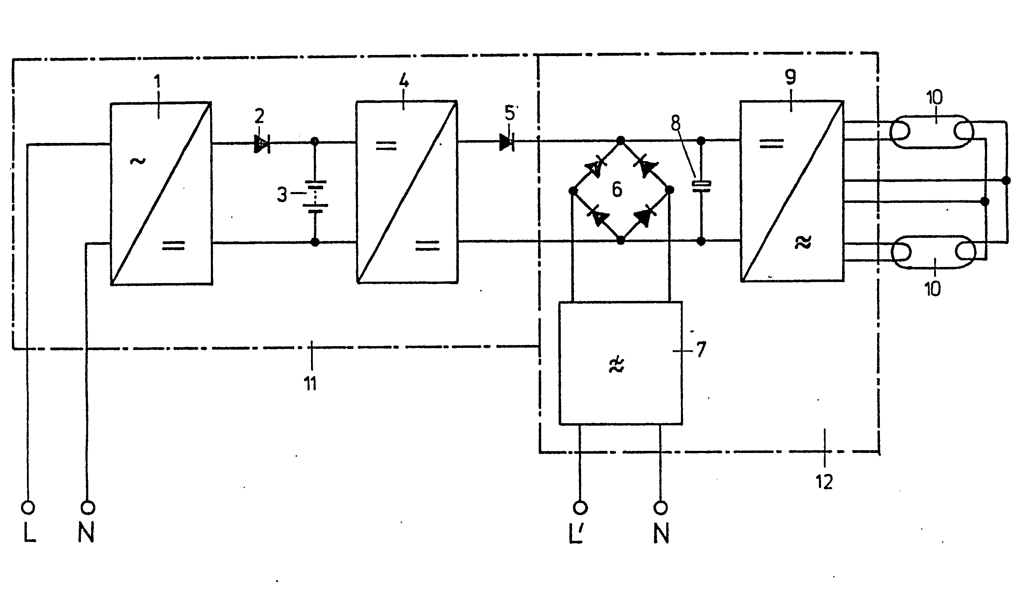

Eine solche Leuchtstofflampen-Sicherheitsleuchte ist aus C.H. Sturm, Vorschaltgeräte und Schaltungen für Niederspannungs-Entladungslampen, 5. Auflage, Verlag Girardet, Essen, 1974, Seite 338, Bild 25.1-267 bekannt. Die bekannte Sicherheitsleuchte besitzt eine Netzüberwachungs- und Umschaltstufe, die bei einem starken Absinken bzw. einem Ausfall der Netzspannung von der Versorgung der Leuchtstofflampe aus dem Netz auf eine Versorgung aus einer Batterie umschaltet.

Für Arbeitsplätze mit besonderer Gefährdung wird gemäss VDE 0108 eine Umschaltzeit zwischen Normal- und Notbetrieb < 0,5 sec gefordert. Diese schnellen Umschaltzeiten sind bei Leuchtstofflampen im Startbetrieb im allgemeinen nicht realisierbar. Die bekannte Sicherheitsleuchte ist ferner nicht universell für verschiedene Netzspannungen und Netzfrequenzen einsetzbar.

Der Erfindung liegt die Aufgabe zugrunde, eine Leuchtstofflampen-Sicherheitsleuchte der eingangs genannten Art anzugeben, die eine unterbrechungsfreie Netz-Notlichtumschaltung ermöglicht und als universelle Kombination elektronisches Vorschaltgerät — Notlicht-Versorgungsgerät für verschiedene Netzspannungsbereiche und Netzfrequenzen konzipiert ist.

Diese Aufgabe wird durch die im Anspruuch 1 gekennzeichneten Merkmale gelöst. Die mit der Erfindung erzielbaren Vorteile bestehen insbesondere darin, dass die Leuchtstofflampen-Sicherheitsleuchte für einen grossen Spannungs- und Frequenzbereich der Netzversorgung einsetzbar ist. Die Leistungsaufnahme ist dabei nahezu konstant und unabhängig von der Eingangsspannung und der Netzfrequenz.

Die Erfindung wird nachstehend anhand des in der Zeichnung dargestellten Ausführungsbeispiels erläutert.

Ein Batterie-Ladegerät 1 ist eingangsseitig mit Netzzuleitungen L, N eines Wechselspannungsversorgungsnetztes verbunden und speist ausgangsseitig über eine Sperrdiode 2 eine Batterie 3. Die Sperrdiode 2 verhindert einen Stromrückfluss von der Batterie 3 in das Ladegerät 1. Die Batterie 3 ist an den Eingang eines Gleichstromumrichters 4 angeschlossen. Der Ausgang des Gleichstromumrichters 4 ist über eine Sperrdiode 5 mit den gleichstromseitigen Anschlüssen eines Brückengleichrichters 6 verbunden. Die wechselstromseitigen Anschlüsse des Gleichrichters 6 sind mit einem Filter 7 beschaltet. Das Filter 7 ist eingangsseitig mit Netzzuleitungen L', N eines Wechselspannungsversorgungsnetzes verbunden.

Zwischen den gleichstromseitigen Anschlüssen des Brückengleichrichters 6 ist ein Stützkondensator 8 angeordnet. Dieselben Anschlüsse sind ferner mit dem Eingang eines Wechselrichters 9 verbunden. An den Ausgang des Wechselrichters 9 sind eine oder mehrere Leuchtstofflampen 10 angeschlossen (im Ausführungsbeispiel eine zweiflammige Leuchtstofflampen-Leuchte).

Die aus den Bauteilen 1 bis 5 bestehende Schaltung 11 kann als Notlichtteil und die aus den Bauteilen 6 bis 9 bestehende Schaltung 12 als Netzteil bezeichnet werden.

Die Leuchtstofflampen 10 werden aus dem Netzteil 12 (elektronisches Vorschaltgerät) gespeist und zwar sowohl im Notlichtbetrieb als auch im Netzbetrieb. Im Netzbetrieb wird der Wechselrichter 9 über den Gleichrichter 6 und das Filter 7 aus dem Netz versorgt, im Notlichtbetrieb wird der Wechselrichter 9 über den Gleichstromumrichter 4 aus der Batterie 3 gespeist.

Das Filter 7 dient zur Unterdrückung störender elektrischer Signale, wie höhenfrequente Störsignale, unzulässige Spannungen und Ströme.

Die Batterie 3 wird aus der ungeschalteten Netzzuleitung L über das Ladegerät 1 bei vorhandener Netzspannung geladen. Die Umschaltung Netz/Notbetrieb erfolgt unterbrechungsfrei, da bei Absinken der Netzspannung der Gleichstromumrichter 4 leitend wird, bevor der Eingangsspannungsbereich des Wechselrichters unterschritten wird. Die Entkopplung der Netz- und Notlichtspeisung des Wechselrichters 9 erfolgt über den Gleichrichter 6 und die Diode 5. Eine galvanische Trennung des Batteriestromkreises vom Netzstromkreis ist nur im Netztransformator des Batterieladegeräts 1 und im Gleichstromumrichter 4 erforderlich, nicht hingegen im Wechselrichter 9.

Eine Anpassung der Leuchtstofflampen 10 an unterschiedliche Netzspannungen und -Frequenzen erfolgt mittels des Batterie-Ladegeräts 1 und des Gleichrichters 6 in Verbindung mit dem Wechselrichter 9. Diese Bauteile werden für einen Spannungsbereich von 190 V bis 280 V und einen Frequenzbereich von 50 Hz bis 400 Hz einstellbar ausgelegt. Es ist also vorteilhaft nicht notwendig, für jede Spannungs/Frequenz-Kombination ein anderes Notlichtversorgungsgerät bereitzustellen, sondern die beschriebene Sicherheitsleuchte deckt universell den gesamten Spannungs- und Frequenzbereich aller üblichen Netzversorgungen ab.

Mittels des Wechselrichters 9 kann ein konstanter Lichtstrom über den gesamten Spannungs- und Frequenzbereich geregelt werden, unabhängig von der Netzspannung und der Netzfrequenz. Hierdurch ergibt sich ein guter Wirkungsgrad unabhängig von der Netzspannung und ein gutes thermisches Verhalten auch im anormalen Betriebszustand, d.h. bei Gleichrichtereffekt der Leuchtstofflampe. Am Ende der Lampenlebensdauer tritt ein unsymmetrischer Lampenstrom auf, weil eine der Lampenelektroden noch gut emittiert, während die andere verbraucht ist. In diesem Fall kann ein herkömmliches induktives Vorschaltgerät, ohne Kondensator mit der Lampe in Reihe geschaltet, infolge einer zu hohen Strombelastung eine zu hohe Erwärmung erreichen. Diese zu hohe Übertemperatur ist insbesondere bei Anwendung im explosionsgeschützten Bereich schädlich, da auch die Temperatur an der Lampenoberfläche stark ansteigt. Bei der erfindungsgemässen Sicherheitsleuchte ist eine derartige Temperaturbeanspruchung nicht gegeben.

Die Leuchtstofflampen 10 werden vorzugsweise mit einer höheren Frequenz als der Netzfrequenz betrieben, da Leuchtstofflampen mit steigender Frequenz einen besseren Wirkungsgrad haben.

## Patentansprüche

1. Leuchtstofflampen-Sicherheitsleuchte, wobei die Leuchtstofflampe im Normalbetrieb über einen Brückengleichrichter (6) mit nachgeschaltetem Stützkondensator (8) und Wechselrichter (9) aus einem Wechselspannungsversorgungsnetz (L', N) sowie im Notbetrieb über einen Wechselrichter (9) aus einer Batterie (3) betreibbar und die Batterie mittels eines Ladegeräts (1) aus dem Wechselspannungsversorgungsnetz (L, N) ladbar ist, gekennzeichnet durch folgende Merkmale:
— der Brückengleichrichter (6) ist wechselspannungsseitig über ein Filter (7) an das Wechselspannungsversorgungsnetz (L', N) angeschlossen,
— der Brückengleichrichter (6) ist gleichspannungsseitig mit dem Stützkondensator (8), mit dem Eingang des Wechselrichters (9) sowie über eine Sperrdiode (5) mit dem Ausgang eines Gleichstromumrichters (4) verbunden,
— der Eingang des Gleichstromumrichters (4) ist mit der Batterie (3) beschaltet.
2. Leuchtstofflampen-Sicherheitsleuchte nach Anspruch 1, dadurch gekennzeichnet, dass die Batterie (3) über eine Sperrdiode (2) mit dem Ausgang des Batterie-Ladegeräts (1) verbunden ist, wobei der Eingang des Ladegeräts (1) direkt am Wechselspannungsversorgungsnetz (L, N) liegt.

## Claims

1. Fluorescent-lamp-type safety light, in which the fluorescent lamp, in normal operation, can be operated via a bridge rectifier (6) which is followed by a supporting capacitor (8) and a DC/AC converter (9) from an alternating-voltage supply system (L', N) and, in emergency operation, can be operated via a DC/AC converter (9) from a battery (3) and the battery can be charged by means of a charging device (1) from the alternating voltage supply system (L, N), characterised by the following features:
— the alternating-voltage side of the bridge rectifier (6) is connected via a filter (7) to the alternating-voltage supply system (L', N),
— the direct-voltage side of the bridge rectifier (6) is connected to the supporting capacitor (8), to the input of the DC/AC converter (9) and, via a blocking diode (5), to the output of a direct-current converter (4),
— the input of the direct-current converter (4) is connected to the battery (3).
2. Fluorescent-lamp-type safety light according to Claim 1, characterised in that the battery (3) is connected via a blocking diode (2) to the output of the battery charging device (1), the input of the charging device (1) being directly connected to the alternating-voltage supply system (L, N).

## Revendications

1. Luminaire de sûreté à lampe fluorescente dans lequel la lampe fluorescente (10) peut être alimentée en service normal par l'intermédiaire d'un pont redresseur (6) suivi d'un condensateur de soutien (8) et d'un convertisseur continu-alternatif (9), à partir d'un secteur d'alimentation à tension alternative (L', N), ainsi qu'en service de secours par l'intermédiaire d'un convertisseur continu-alternatif (9), à partir d'une batterie d'accumulateur (3), celle-ci pouvant être chargée par un chargeur (1) à partir du secteur d'alimentation à tension alternative (L, N), caractérisé par le fait que:
— le pont redresseur (6) est, du côté de la tension alternative, relié aux bornes (L', N) du secteur d'alimentation à tension alternative par l'intermédiaire d'un filtre (7), que
— le pont redresseur (6) est, du côté de la tension continue, relié au condensateur de soutien (8), à l'entrée du convertisseur continu-alternatif (9) ainsi que, par l'intermédiaire de la diode de blocage (5), à la sortie du convertisseur à courant continu (4), et que
— l'entrée du convertisseur à courant continu (4) est connectée à la batterie (3).
2. Luminaire de sûreté à lampe fluorescente selon revendication 1, caractérisé par le fait que la batterie d'accumulateur (3) est reliée, par l'intermédiaire d'une diode de blocage (2), à la sortie du chargeur du batterie (1), l'entrée de ce dernier étant directement branchée aux bornes (L, N) du secteur d'alimentation à tension alternative.

0 079 462